# EUROPEAN PATENT SPECIFICATION

(11) **EP 2 716 434 B1**
(45) Date of publication and mention of the grant of the patent: **02.12.2020**
(21) Application number: 12187165.1
(22) Date of filing: 04.10.2012
(51) Int. Cl.: B29C 70/20, B29B 11/16, F03D 1/06

(54) **Spar cap for a rotor blade of a wind turbine and method of manufacturing a spar cap**
Holmgurt für eine Windturbinenlaufschaufel und Verfahren zur Herstellung des Holmgurts
Capuchon de longeron pour pale de rotor d'une éolienne et procédé de fabrication du capuchon de longeron

(43) Date of publication of application: 09.04.2014
(73) Proprietor: Adwen Blades GmbH, 21683 Stade (DE)
(72) Inventor: Wagner, Raimund, 22391 Hamburg (DE); Koch, Fred, 18057 Rostock (DE); Bäcker, Jörg, 24782 Büdelsdorf (DE)
(74) Representative: Aspacher, Karl-Georg

(56) References cited:
- EP-A1- 2 283 995
- GB-A- 1 207 065
- US-A- 4 265 981
- US-A1- 2006 172 636

## Description

### FIELD OF THE INVENTION

The invention relates to a rotor blade of a wind turbine comprising a spar cap and to a method of manufacturing the rotor blade. The invention also relates to a wind turbine having a rotor comprising a rotor blade.

### BACKGROUND

As generally known in the art, wind turbines, also referred to as wind driven power plants or wind power plants have a rotor that carries rotor blades. Each blade is mounted to the rotor at the wing root and spans gradually towards to the free wing tip. The distance between the wing root and the wing tip is referred to as the span of the rotor blade. For modern wind turbines, the span can measure about 50 m which means that the rotor blades are subject to considerable forces.

The rotor blade has a leading edge which is the edge of the rotor blade that first contacts the moving air. Opposite to the leading edge is the trailing edge where the air flow that has been separated by the leading edge rejoins after passage over the suction surface and the pressure surface of the blade. The aerodynamic properties of the rotor blade are mainly defined by the airfoil or wing-profile which is the shape of the suction surface and the pressure surface of the rotor blade, if considered in a cross section perpendicular to the span.

Rotor blades are often fabricated by building two or more skin shell portions, for example, from layers of woven fabric and synthetic resin. Spar caps are then placed in the shell portions. Typically, there is at least one upper spar cap, which is adjacent to the suction surface, and at least one lower spar cap which is adjacent to the pressure surface of the rotor blade. At least one web connects the upper and the lower spar cap(s) and substantially projects along the spar caps. This web, together with the upper and lower spar cap(s) forms a spar or wing spar of the rotor blade. The spar takes up the majority of mechanical forces during operation of the rotor blade and introduces the angular momentum into the rotor shaft.

The forces, which are applied to the spar caps during operation, are high near to the wing root and decrease with increasing distance from the wing root. If a tensile force is considered along the span of the blade starting at the wing root, the graph of the tensile force decreases towards the wing tip. The spar caps have to take up high mechanical loads near the wing root and lower forces near the wing tip. Accordingly, a thickness or an area of a cross-section of the spar caps decreases with increasing distance from the wing root.

According to the prior art, spar caps are manufactured using a plurality of fiber mats, layers of scrim or layers of woven fabric. The fibrous material is placed into a mold in overlapping successive layers. Impregnation using a synthetic resin is performed and subsequently, the compound is cured, so as to provide a fiber-reinforced member. For example, the fibrous material may be impregnated using vacuum assisted resin infusion. Naturally, pre-impregnated fiber material (prepreg-fibers) may be applied for manufacturing the spar cap. Curing of the prepreg-fibers is typically performed by hot pressing.

In order to provide spar caps having a decreasing cross-section, layers of scrim are cut, preferably using a CNC-machine. The layers of scrim, which may be UD-layers, are cut to a desired length and tapper towards one of their ends from an initial width down to a reduced width. Subsequently, layers of different length are wrapped up and transported to the production facility of the rotor blades. However, CNC-cutting produces cuts which are typically scrapped. The fibrous material is costly and scrapping parts of this valuable material increases the production cost. Further, CNC-cutting and final assembly of the rotor blade are performed at different production sites. The layers of scrim have to be packed and transported to the facility for final assembly of the rotor blade. Upon arrival, the CNC cut layers of scrim have to be sorted by their length in order to prepare them for use during the assembly of the rotor blade. This however is a very time consuming task.

Machine cost for CNC-cutting, transportation expenses and labor-intensive preparation of the layers of scrim contribute to the production cost of the spar cap for rotor blades of a wind turbine.

US 2006/172639 A1 discloses a spar cap for a rotor blade of a wind turbine. The spar cap is arranged along a span of the rotor blade. However, the spare caps are manufactured using a UD-fabric, which is not sufficiently efficient.

EP 2 283 995 A1 also discloses a spar cap for a rotor blade of a wind turbine. However, the way of manufacturing the spar cap is rather complex and expensive.

US 4 265 981 A and GB 1 207 065 A disclose further aspects of using and manufacturing specific materials.

### SUMMARY

It is an object of the invention to provide an improved rotor blade, an improved wind turbine and an improved method of manufacturing the spar cap.

The object is solved by the subject matter of independent claims 1 and 7.

In one aspect of the invention, a rotor blade of a wind turbine is provided, the rotor blade comprising at least one spar cap. The spar cap is configured to be arranged along a span of the rotor blade and substantially extends between the wing root and the wing tip, when the spar cap is mounted in the rotor blade. The spar cap comprises a plurality of bundles of fiber rovings which are embedded in a matrix so as to provide a fiber-reinforced member. An area of a cross-section of the spar cap, which is considered in a plane of the airfoil of the rotor blade, decreases with increasing distance from the wing root. In other words, the cross-section of the spar cap starts with an initial first area near the wing root and decreases to a second area, which is smaller than the first area, in a section of the spar cap which is arranged near to the wing tip. Bundles of fiber rovings having a different length are embedded in the matrix. In particular, there is a first bundle of fiber rovings starting at a position of the spar cap which is close to the wing root. This first bundle of fiber rovings extends spanwise, i.e. in a direction of the span of the rotor blade towards the wing tip. The first bundle of fiber rovings extends up to a first maximum distance from the wing root. Furthermore, there is a second bundle of fiber rovings starting at the same position of the spar cap as the first bundle of fiber rovings and extends spanwise towards the wing tip up to a second maximum distance from the wing root. The second length of the second bundle of fiber rovings is greater than the first length of the first bundle of fiber rovings. In other words, the first bundle reaches the first maximum distance which is smaller than the second maximum distance which is defined by the second length of the second bundle.

Advantageously, the spar cap according to aspects of the invention is manufactured without a need for layers of scrim which are cut to a different length and shape. These are replaced by bundles of fiber rovings. Preferably, carbon fibers are applied. The bundles of fiber rovings may have a diameter which is approximately 10 mm. The bundles of fiber rovings are small in comparison to a width of the spar cap and by simply cutting the bundles of fiber rovings to a desired length, a different cross-section of the spar cap may be achieved without any loss of material. Furthermore, cutting of the bundles of fiber rovings may be performed in real time and does not require any heavy hardware such as a CNC cutting machine. The fiber roving is a semifinished product which is typically provided on large rolls. Cutting of the fiber rovings may be performed directly at the manufacturing site for final assembly of the rotor blade. This can significantly simplify logistics of the production, there is no transport and no sorting of layers of scrim. Advantageously, a significant reduction in production cost for the spar cap may be expected. Finally, a same semifinished product, i.e. the bundles of fiber rovings, may be applied for manufacture of different spar caps which are suitable for example for different sizes or types of rotor blades.

The spar cap is built by individually cut pieces of a long bundle of fiber rovings. The bundle of fiber rovings is advantageously cut at the manufacturing site.

The bundle of fiber rovings may be a bundle which is braided or laid. Furthermore, the bundles of fiber rovings may be wrapped. Individual bundles of fiber rovings or a group or plurality of fiber roving may be wrapped. For example, the bundles of fiber rovings may be wrapped using single fiber spiral wrapping or double crossed spiral wrapping. However, any other suitable wrapping technology may be applied. The material which used for the wrapping may be different when compared to the material of the fibers of the fiber rovings. For example, glass fibers may be used to wrap up a bundle of carbon fibers. Other suitable wrapping materials may be a textile or a polymer material. The wrapping material may be a single fiber or a fiber bundle. However, the wrapping may be flat stripes, flat woven fiber material or a laminate.

During infusion of the resin, there is a risk that the fiber rovings are deformed. The fiber rovings may buckle or bend or may become deformed otherwise due to the impact of the vacuum and the resin, for example during vacuum assisted resin infusion. A rotor blade material having a section comprising ondulations of bundles may cause a mechanical weak point in some cases, for example due to insufficient resin impregnation in the bending or buckling areas. Advantageously, wrapping of the bundle of fiber rovings increases the stiffness of the bundles. Bending or buckling due to resin infusion is significantly reduced if not completely avoided.

According to an advantageous embodiment of the invention, a number of bundles of fiber rovings in a certain cross-section of the spar cap and at a certain distance from the wing root decreases with decreasing area of the cross-section of the spar cap. The cross-section is substantially parallel to the airfoil of the rotor blade (i.e. perpendicular to the span of the rotor blade). In other words, there is a correlation between the area of the cross-section of the spar cap and the number of bundles in said cross-section. For example, the number of bundles in the cross-section decreases with decreasing thickness of the spar cap. This is to keep a filling factor of the fiber-reinforced material approximately constant over the length of the spar cap.

Advantageously, the plurality of bundles of fiber rovings comprises groups. The bundles of each group may then have a predetermined and substantially identical length. Classifying the bundles of fiber rovings according to their length can simplify the manufacture of the spar cap.

Preferably, the rotor blade comprises at least two spar caps, wherein a first pair of spar caps is arranged adjacent to a suction surface of the rotor blade and a second pair of spar caps is arranged adjacent to a pressure surface of the rotor blade.

According to another aspect of the invention, a wind turbine having a rotor comprising at least one rotor blade according to aspects of the invention is provided.

Same or similar advantages which have been already mentioned with respect to the rotor blade apply to the wind turbine in a same or a similar way and will therefore not be repeated.

According to another aspect of the invention, a method of manufacturing a spar cap for a rotor blade of the wind turbine is provided. The spar cap is configured to be arranged along a span of the rotor blade and substantially extends between the wing root and the wing tip, when the spar cap is mounted in the rotor blade. A first bundle of fiber rovings is arranged in a mold for manufacturing the spar cap. The mold is provided for manufacturing a spar cap having a cross-section in a plane of the airfoil of the rotor blade, wherein the area of the cross-section decreases with increasing distance from the wing root. The first bundle of fiber rovings is arranged in the mold so as to start at a position of the spar cap which is close to the wing root. The first bundle extends spanwise, i.e. in a direction of the span of the rotor blade towards the wing tip up to a first maximum distances from the wing root. The first bundle of fiber rovings is cut to a first length which determines the first maximum distances from the wing root.

A second bundle of fiber rovings is arranged in the mold. The second bundle of fiber rovings starts at the same position of the spar cap as the first bundle of fiber rovings and extends spanwise towards the wing tip up to a second maximum distance from the wing root. The second bundle of fiber rovings is cut to a second length which determines the second maximum distances from the wing root. The second length of the second bundle of fiber rovings is greater than the first length of the first bundle of fiber rovings.

Subsequently, the plurality of bundles of fiber rovings can be cured so as to provide a fiber-reinforced member comprising the plurality of bundles of fiber rovings which are embedded in a matrix. This step serves to increase stability.

The bundle of fiber rovings may be provided as a semifinished product. The bundle of fiber roving can be arranged on a roll, wherein a bundle of fiber rovings having a large initial length may be provided. The first bundle and the second bundle of fiber rovings may be consecutively cut from this fiber roving having an initial length which is much greater than the second length. The initial length may be greater than a sum of the first length and the second length. A magnitude of the initial length of the bundle of fiber rovings may be in the range of hundreds or even thousands of meters.

The first and second bundle of fiber rovings may first be arranged in the mold and then, which means subsequently, be cut so as to obtain bundle of fiber rovings of a desired length. The bundles of fiber rovings may have a diameter which is approximately 10 mm. Furthermore, cutting of the bundles of fiber rovings may be performed in real time. Cutting of the fiber rovings may be performed at the manufacturing site for final assembly of the rotor blade. The bundle of fiber rovings is provided at the manufacturing site for manufacture of the rotor blade. For example on a large roll. Bundles of fiber rovings are first arranged in the mold and then directly cut to the desired length at the manufacturing site for the rotor blade.

According to an advantageous aspect of the invention, bundles of fiber rovings are wrapped prior to arrangement in the mold. The wrapping may be performed according to the previously mentioned aspects of the invention.

The plurality of bundles of fiber rovings is cured so as to provide a fiber-reinforced member forming a spar cap comprising the plurality of bundles of fiber rovings. Preferably, resin infusion is performed prior to curing the fibrous material, wherein commonly known resin infusion methods such as vacuum assisted resin infusion may be applied. However, pre-impregnated fibers may be applied and accordingly, there is no need to perform resin infusion.

The method according to aspects of the invention is advantageous in that, all steps for manufacturing the spar cap may be performed on site and during final assembly of the rotor blade. Advantageously, there is no need for precut layers of scrim and there is no need for a time consuming preparation of these layers. There is one prefabricated material, namely the bundle of fiber rovings which may be provided on a large roll and which may be applied for manufacturing a plurality of different spar caps.

According to an advantageous aspect of the invention, the mold for manufacturing the spar cap is a part of the shell of the rotor blade. This means, the spar cap is directly manufactured inside the respective shell of the rotor blade. Advantageously, there is no need for an extra mold.

Further advantages of the method according to aspects of the invention are similar to the advantages which have been mentioned with respect to the spar cap of the rotor blade. Consequently, these will not be repeatedly mentioned.

According to another aspect of the invention, a fiber-reinforced spar cap which is obtainable by the method according to aspects of the invention is provided.

An apparatus for performing the necessary steps for manufacturing a spar cap of a rotor blade in accordance with aspects of the invention is also conceivable. The invention, and in particular the specific steps of manufacturing the spar cap described herein above, are particularly apt to be realized in with an automated machine/apparatus.

The apparatus may then advantageously have means for arranging bundles of fiber rovings in a mold. The arranging means may be configured to arrange the first bundle of fiber rovings in a mold for manufacturing the spar cap. As previously described, the spar cap can have a cross-section in a plane of the airfoil of the rotor blade, wherein the area of the cross-section can decrease with increasing distance from the wing root. The first bundle of fiber rovings may start at a position of the spar cap which is close to the wing root and extend spanwise towards the wing tip up to a first maximum distances from the wing root. The means for arranging the bundles can be, for example a grabber, a claw, a hook, a picker arm or the like.

The apparatus advantageously comprises a means for cutting the bundles. The cutting means may then be configured to cut the first bundle of fiber rovings to a first length determining the first maximum distances from the wing root. The cutting means may be or comprise a saw, a cutting knife or the like.

The apparatus can also have a means for arranging a second bundle of fiber rovings in the mold. This may be the same as the arranging means for arranging the first bundle of fiber rovings. The second bundle of fiber rovings may start at the position of the spar cap which is close to the wing root and extends spanwise towards the wing tip up to a second maximum distances from the wing root. The means for arranging the second bundles can also be, for example a grabber, a claw, a hook, a picker arm or the like.

Advantageously, there might be a cutting means for cutting the second bundle of fiber rovings to a second length determining the second maximum distances from the wing root, wherein the second length is greater than the first length. This cutting means may be the same cutting means as the one used for the first bundle.

The apparatus may additionally comprise means for wrapping the bundle of fiber rovings prior to arranging the first and/or second bundle in the mold.

In addition to the above aspects, the apparatus may also be configured to perform some or all of the other manufacturing steps according to aspects of the invention.

The apparatus according to the invention can advantageously be installed at the manufacturing site of the spar cap.

The apparatus according to the above aspects of the invention is particularly efficient and advantageous as the method of manufacturing the spare cap according to the invention allows for enhanced automation. This is, for example due to the fact that the bundles do not have a preferred bending-direction (other than a scrim) thereby preventing wrinkles or waves even in an automated process.

### BRIEF DESCRIPTION OF DRAWINGS

Further aspects and characteristics of the invention ensue from the following description of preferred embodiments of the invention with reference to the accompanying drawings, wherein
FIG. 1 is a wind turbine according to an embodiment of the invention,
FIG. 2 is a simplified perspective view of a rotor blade according to an embodiment of the invention,
FIG. 3 is a simplified top view of a plurality of bundles of fiber rovings for manufacturing a spar cap according to an embodiment of the invention,
FIG. 4 is a simplified cross-section of the plurality of bundles of fiber rovings of FIG. 3,
FIG. 5 is a simplified perspective view of said plurality of bundles of fiber rovings of FIG. 3 and FIG. 4 and
FIG. 6 is a simplified perspective view of a wrapped bundle of fiber rovings, according to another embodiment of the invention.

### DETAILED DESCRIPTION OF EXAMPLE EMBODIMENTS

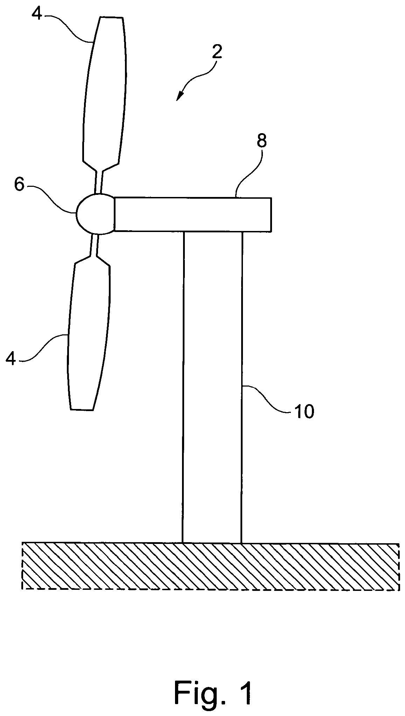

FIG. 1 is a simplified view of a wind turbine 2 according to an embodiment of the invention. The wind turbine 2 comprises a rotor having a plurality of rotor blades 4 which are mounted to a rotor hub 6. A nacelle 8 carries a generator and a drive train which is coupled to the rotor hub 6. The nacelle 8 is mounted on a tower 10 which is founded in the sea, if the wind turbine 2 is an offshore plant, or on the ground if the wind turbine 2 is land based.

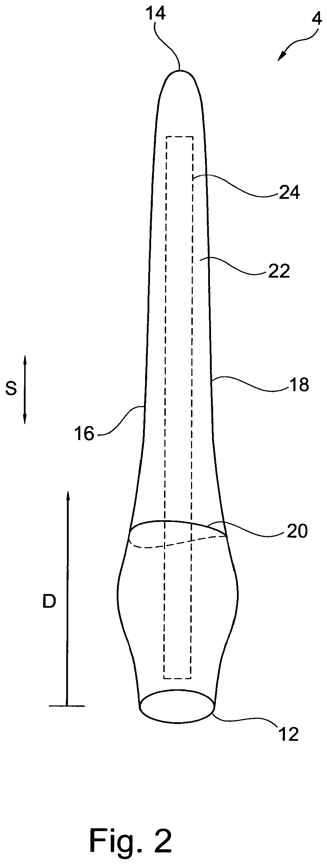

The rotor blades 4 of the wind turbine 2 may be configured according to the embodiment in FIG. 2 showing a simplified perspective view of a rotor blade 4. The rotor blade 4 comprises a wing root 12 and a wing tip 14. A leading edge 16 of the rotor blade 4 is the front most point which contacts the air during operation of the rotor blade 4. A trailing edge 18 is arranged opposite to the leading edge 16. The airfoil 20 of the rotor blade 4 is illustrated in a simplified cross-section and defines a shape of a suction surface 22 and an opposite pressure surface (not visible) of the rotor blade 4. A distance between the wing root 12 and the wing tip 14 is a span of a rotor blade 4. A spar cap 24 which is adjacent to the suction surface 22 of the rotor blade 4 is shown in dashed line. The spar cap 24 substantially extends along the span of the rotor blade 4 between the wing root 12 and the wing tip 14. A spanwise direction is indicated by the double arrow S. A further arrow indicates a direction D for measuring a distance from the wing root 12 in spanwise direction.

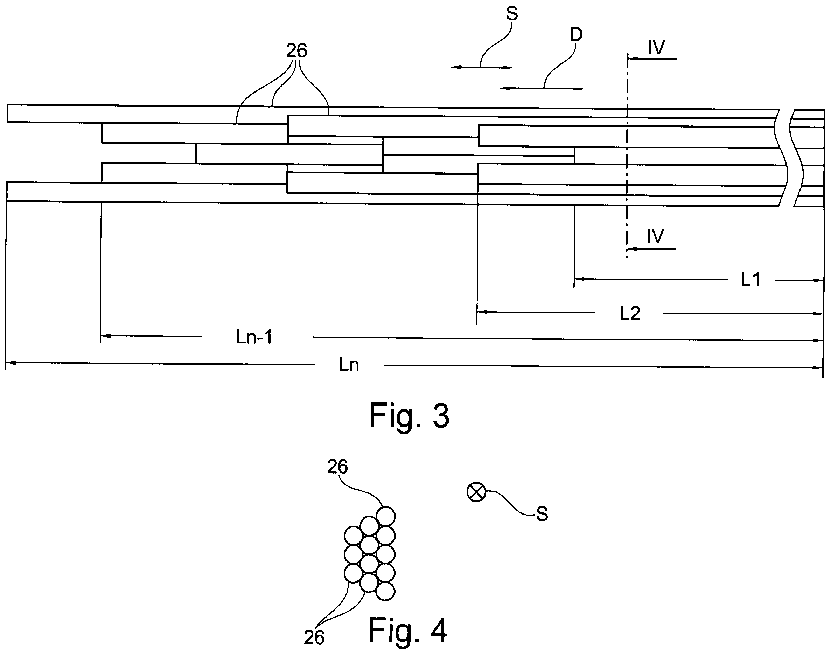

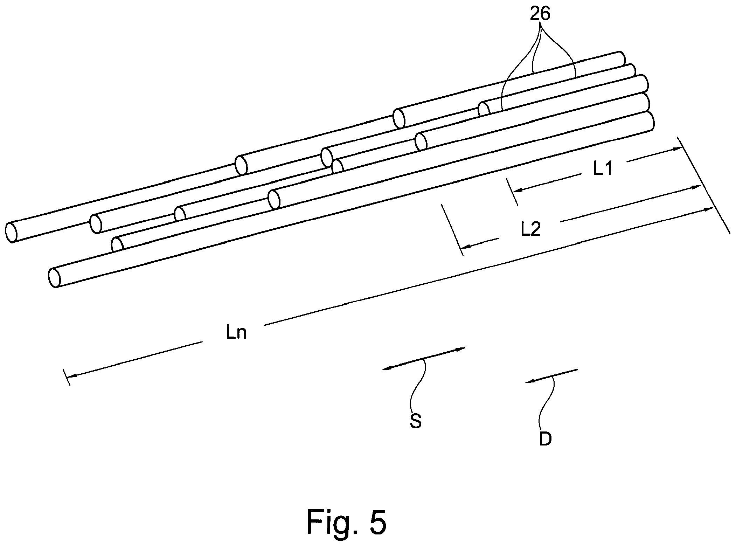

In FIG. 3 there is a simplified top view of a plurality of bundles 26 of fiber rovings for manufacturing a spar cap 24 according to an embodiment of the invention. FIG. 4 provides a simplified cross-section along line IV-IV in FIG. 3. FIG. 5 is a simplified perspective view of the plurality of bundles 26 of fiber rovings, according to the embodiment of the invention. The embodiment will be explained in more detail by making reference to the FIGs. 3 to 5. In the figures, the plurality of bundles 26 for manufacturing a spar cap 24 is depicted without the matrix which surrounds the plurality of bundles 26.

The plurality of bundles 26 of fiber rovings extends in a direction S of the span of the rotor blade 4. This is considered if the spar cap 24 is mounted in the rotor blade 4. The cross-section in FIG. 4 is substantially parallel to the airfoil 20 of the rotor blade 4. A value of the cross-section, for example the area of the cross-section or, in other words a thickness of the spar cap 24, decreases with increasing distance from the wing root 12. With decreasing area of the cross-section of the spar cap 24, the number of bundles 26 of fiber rovings, which may be found in this cross-section, decreases. This is to provide a correlation between the area of the cross-section and the number of bundles 26 of fiber rovings in this area. A filling factor of the fiber-reinforced material, which may be defined as a ratio between a cross-sectional area which is occupied by fibers and an area which is occupied by the surrounding matrix, is kept approximately constant along the span of the rotor blade 4.

The bundles 26 of fiber rovings are cut to predetermined lengths L1, L2..Ln. Each bundle 26 of fiber rovings extends up to a maximum distance from the wing root 12. This maximum distance is determined starting at the wing root 12, following direction D up to an end of the bundle 26 of fiber rovings which is distant from the wing root. The length L1, L2..Ln of the respective bundle 26 of fiber rovings determines the individual maximum distance. The bundles 26 of fiber rovings are preferably arranged in subsequent layers (see FIG. 4). The different lengths L1, L2..Ln of the bundles 26 of fiber rovings successively lowers the cross-section or thickness of the spar cap 24 with increasing distance from the wing root 12. Naturally, area of the cross-section of the spar cap 24 may be approximately constant over a considerable amount of its length. For example, the spar cap 24 starting near the wing root 12 has an approximately constant thickness for at least half of its entire length. In the second half, the thickness is successively reduced and the number of bundles 26 in the cross-section decreases, as it is shown in FIGs. 3 to 5.

The bundles 26 of fiber rovings may have a diameter of approximately 10 mm. Advantageously, the bundles 26 of fiber rovings are cut to the desired lengths L1, L2..Ln directly at the production site for manufacturing the spar cap 24 and the rotor blade 4. Advantageously, the plurality of bundles 26 of fiber rovings are directly placed into a half shell of the rotor blade 4 which serves as a mold for manufacturing the spar cap 24. After arrangement of the plurality of bundles 26 of fiber rovings, the fibrous material is impregnated using a resin. In particular, the fibers for the bundles 26 of fiber rovings are carbon fibers and the applied resin is a synthetic resin. Advantageously, this applies to all embodiments of the invention.

The simplified perspective view of FIG. 5 further illustrates the successive decrease of the thickness or cross-section of the spar cap 24 with increasing distance from the wing root 12 due to the different lengths L1, L2..Ln of the bundles 26 of fiber rovings.

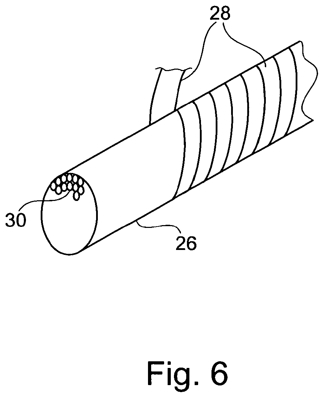

To provide the bundles 26 of fiber rovings with an increased stiffness, which may be advantageous for the molding process, in order to prevent buckling or bending of the bundles 26, the bundles 26 of fiber rovings may be wrapped using a suitable wrapping 28. In FIG. 6, there is a simplified perspective view of a single bundle 26 of fiber rovings 30. Only few fiber rovings 30 are depicted in FIG. 6. The wrapping 28 may be a flat stripe of textile or polymer material. However, single fibers may be applied for wrapping the bundle 26 of fiber rovings. Different wrapping technologies, for example spiral wrapping or cross spiral wrapping may be applied.

The spar cap 24 may be manufactured by arranging a first bundle 26 or a first group of bundles 26 of fiber rovings in a mold. For example, the uppermost bundle 26 in FIG. 3 is placed first. The bundle 26 is rolled off from a large roll carrying the bundle of fiber rovings having the initial length which may be hundreds of meters. After arrangement of the bundle 26, it is cut to length L1. Cutting is performed directly on the production site. The bundle 26 extends spanwise, i.e. in direction D along the span of the rotor blade towards the wing tip 14 up to a maximum distances from the wing root 12.

Subsequently, a second bundle 26 of fiber rovings is arranged in the mold. For example, the second bundle 26 may be a bundle having a length L2 in FIG. 3. The second bundle 26 starts at the same position of the spar cap 24 as the first bundle 26 of fiber rovings and extends spanwise, i.e. in direction D, towards the wing tip 14 up to a second maximum distance from the wing root 12. The second bundle 26 of fiber rovings is rolled off from the large roll and cut to the second length L2 which determines the second maximum distances from the wing root 12 directly on the production site. The second length L2 of the second bundle 26 of fiber rovings is greater than the first length L1 of the first bundle 26 of fiber rovings.

Subsequently, the plurality of bundles 26 of fiber rovings is cured so as to provide a fiber-reinforced member comprising the plurality of bundles 26 of fiber rovings which are embedded in a matrix.

The bundle 26 of fiber rovings may be provided as a semifinished product which is provided on a large roll. The first bundle 26 (length L1) and the second bundle 26 (length L2) of fiber rovings may be consecutively cut from this fiber roving having an initial length which is much greater than the length L1, L2..Ln of the bundles 26 of fiber rovings.

The bundle can be a pre-preg, i.e. a resin preimpregnated fibre material.

## Claims

1. A rotor blade for a wind turbine, the rotor blade (4) comprising at least one spar cap (24), wherein the spar cap (24) is arranged along a span of the rotor blade (24) and substantially extends between the wing root (12) and the wing tip 5 (14), wherein the spar cap comprises a plurality of bundles (26) of fiber rovings (30), which are embedded in a matrix so as to provide a fiber-reinforced member, and wherein an area of a cross-section of the spar cap (24) in a plane of the airfoil of the rotor blade (4), decreases with increasing distance from the wing root (12) and bundles (26) of fiber rovings (30) are embedded in the matrix, wherein a first 10 bundle (26) of fiber rovings (30) starts at a position of the spar cap (24), which is close to the wing root (12) and extends spanwise towards the wing tip (14) up to a first maximum distance from the wing root (12), and a second bundle (26) of fiber rovings (30) starts at the position of the spar cap (24), which is close to the wing root (12) and extends spanwise towards the wing tip (14) up to a second maximum 15 distance from the wing root, wherein the second length (L2) of the second bundle (26) of fiber rovings (30) is greater than the first length (L1) of the first bundle (26) of fiber rovings (30), **characterized in that** the plurality of fiber rovings (30) is directly placed into a half shell of the rotor blade (4) during manufacture of the spar cap (24).

2. The rotor blade according to claim 1, wherein a number of bundles (26) in the cross-section of the spar cap (24) decreases with decreasing area of the crosssection of the spar cap (24).

3. The rotor blade according to claim 1 or 2, wherein the plurality of bundles (26) of fiber rovings (30) comprises groups of bundles of fiber rovings, wherein the bundles (26) of fiber rovings (30) of each group have a predetermined and substantially identical length.

4. The rotor blade according to anyone of the preceding claims, wherein the bundles (26) of fiber rovings (30) are wrapped.

5. The rotor blade according to claim 4, wherein a material of the wrapping is different compared to a material of the fibers of the fiber rovings (30).

6. A wind turbine (2) having a rotor comprising at least one rotor blade (4) according to anyone of the preceding claims.

7. A method of manufacturing a spar cap (24) for a rotor blade (4) of a wind turbine (2), wherein the spar cap (24) is configured to be arranged along a span of the rotor blade (4) and substantially extends between the wing root (12) and the wing tip (14), when the spar cap (24) is mounted in the rotor blade (4), the method comprising the steps of:
arranging a first bundle (26) of fiber rovings (30) in a mold for manufacturing the spar cap (24) having a cross-section in a plane of the airfoil of the rotor blade (4), wherein the area of the cross-section decreases with increasing distance from the wing root (12), and wherein the first bundle (26) of fiber rovings starts at a position 10 of the spar cap which is close to the wing root (12) and extends spanwise towards the wing tip (14) up to a first maximum distances from the wing root (12),
cutting the first bundle (26) of fiber rovings (30) to a first length (L1) determining the first maximum distances from the wing root,
arranging a second bundle (26) of fiber rovings (30) in the mold, wherein the second bundle (26) of fiber rovings (30) starts at the position of the spar cap (24) which is close to the wing root (12) and extends spanwise towards the wing tip (14) up to a second maximum distances from the wing root, and
cutting the second bundle (26) of fiber rovings (30) to a second length (L2) determining the second maximum distances from the wing root, wherein the second length (L2) is greater than the first length (L1),
**characterized in that**
the plurality of fiber rovings (30) is directly placed into a half shell of the rotor blade (4) during manufacture of the spar cap (24).

8. The method according to claim 7, further comprising:
curing the plurality of bundles (26) of fiber rovings (30) so as to provide a fiber-reinforced member comprising the plurality of bundles (26) of fiber rovings (30) which are embedded in a matrix.

9. The method according to claim 7 or 8, further comprising: providing a fiber roving (30) at the manufacturing site for manufacture of the rotor blade (4), arranging and cutting the first bundle (26) and the second bundle (26) of fiber rovings (30) at the manufacturing site.

10. The method of manufacturing a spar cap according to anyone of claims 7 to 9, wherein first bundle (26) and the second bundle (26) of fiber rovings (30) are cut from a fiber roving having an initial length which is greater than the second length (L2) and/or greater than a sum of the first length (L1) and the second length (L2).

11. The method of manufacturing a spar cap according to anyone of the claims 7 to 10, further comprising the step of wrapping a bundle (26) of fiber rovings (30) prior to an arrangement of the plurality of fiber rovings (30) in the mold.

## Patentansprüche

1. Laufschaufel für eine Windturbine, wobei die Laufschaufel (4) zumindest einen Holmgurt (24) umfasst, wobei der Holmgurt (24) entlang einer Spannweite der Laufschaufel (24) angeordnet ist und sich im Wesentlichen zwischen der Flügelwurzel (12) und der Flügelspitze (14) erstreckt, wobei der Holmgurt mehrere Bündel (26) von Fasersträngen (30) umfasst, die in eine Matrix eingebettet sind, um ein faserverstärktes Element bereitzustellen, und
wobei sich eine Fläche eines Querschnitts des Holmgurts (24) in einer Ebene des aerodynamischen Profils der Laufschaufel (4) mit zunehmendem Abstand von der Flügelwurzel (12) verringert und Bündel (26) von Fasersträngen (30) in die Matrix eingebettet sind, wobei ein erstes Bündel (26) von Fasersträngen (30) an einer Position des Holmgurts (24) startet, die nahe an der Flügelwurzel (12) ist und sich spannweitig in Richtung der Flügelspitze (14) erstreckt bis zu einem ersten maximalen Abstand von der Flügelwurzel (12), und wobei ein zweites Bündel (26) von Fasersträngen (30) an der Position des Holmgurts (24) startet, die nahe an der Flügelwurzel (12) ist und sich spannweitig in Richtung der Flügelspitze (14) erstreckt bis zu einem zweiten maximalen Abstand von der Flügelwurzel, wobei die zweite Länge (L2) des zweiten Bündels (26) von Fasersträngen (30) größer als die erste Länge (L1) des ersten Bündels (26) von Fasersträngen (30) ist,
**dadurch gekennzeichnet, dass** die mehreren Faserstränge (30) während der Fertigung des Holmgurts (24) direkt in einer Halbschale der Laufschaufel (4) platziert werden.

2. Laufschaufel nach Anspruch 1, wobei sich eine Anzahl von Bündeln (26) im Querschnitt des Holmgurts (24) mit abnehmender Querschnittsfläche des Holmgurts (24) verringert.

3. Laufschaufel nach Anspruch 1 oder 2, wobei die mehreren Bündel (26) von Fasersträngen (30) Gruppen von Bündeln von Fasersträngen umfassen, wobei die Bündel (26) von Fasersträngen (30) jeder Gruppe eine vorbestimmte und im Wesentlichen identische Länge aufweisen.

4. Laufschaufel nach einem der vorhergehenden Ansprüche, wobei die Bündel (26) von Fasersträngen (30) umhüllt sind.

5. Laufschaufel nach Anspruch 4, wobei ein Material der Umhüllung unterschiedlich ist im Vergleich mit einem Material der Fasern der Faserstränge (30).

6. Windturbine (2) mit einem Läufer, umfassend zumindest eine Laufschaufel (4) nach einem der vorhergehenden Ansprüche.

7. Verfahren zur Fertigung eines Holmgurts (24) für eine Laufschaufel (4) einer Windturbine (2), wobei der Holmgurt (24) dazu ausgelegt ist, entlang einer Spannweite der Laufschaufel (4) angeordnet zu werden, und sich im Wesentlichen zwischen der Flügelwurzel (12) und der Flügelspitze (14) erstreckt, wenn der Holmgurt (24) in der Laufschaufel (4) montiert ist, wobei das Verfahren die folgenden Schritte umfasst:
Anordnen eines ersten Bündels (26) von Fasersträngen (30) in einer Form zur Fertigung des Holmgurts (24) mit einem Querschnitt in einer Ebene des aerodynamischen Profils der Laufschaufel (4), wobei sich die Querschnittsfläche mit zunehmendem Abstand von der Flügelwurzel (12) verringert, und wobei das erste Bündel (26) von Fasersträngen an einer Position des Holmgurts startet, die nahe der Flügelwurzel (12) ist, und sich spannweitig in Richtung der Flügelspitze (14) erstreckt bis zu ersten maximalen Abständen von der Flügelwurzel (12),
Schneiden des ersten Bündels (26) von Fasersträngen (30) auf eine erste Länge (L1), die ersten maximalen Abstände von der Flügelwurzel bestimmend,
Anordnen eines zweiten Bündels (26) von Fasersträngen (30) in der Form, wobei das zweite Bündel (26) von Fasersträngen (30) an der Position des Holmgurts (24) startet, die nahe an der Flügelwurzel (12) ist, und sich spannweitig in Richtung der Flügelspitze (14) erstreckt bis zu zweiten maximalen Abständen von der Flügelwurzel, und
Schneiden des zweiten Bündels (26) von Fasersträngen (30) auf eine zweite Länge (L2), die zweiten maximalen Abstände von der Flügelwurzel bestimmend, wobei die zweite Länge (L2) größer als die erste Länge (L1) ist,
**dadurch gekennzeichnet, dass**
die mehreren Faserstränge (30) während der Fertigung des Holmgurts (24) direkt in einer Halbschale der Laufschaufel (4) platziert werden.

8. Verfahren nach Anspruch 7, ferner umfassend Aushärten der mehreren Bündel (26) von Fasersträngen (30), um ein faserverstärktes Element bereitzustellen, das die mehreren Bündel (26) von Fasersträngen (30) umfasst, die in eine Matrix eingebettet sind.

9. Verfahren nach Anspruch 7 oder 8, ferner umfassend Bereitstellen eines Faserstrangs (30) am Fertigungsort zur Fertigung der Laufschaufel (4), wobei das erste Bündel (26) und das zweite Bündel (26) von Fasersträngen (30) am Fertigungsort angeordnet und geschnitten werden.

10. Verfahren zur Fertigung eines Holmgurts nach einem der Ansprüche 7 bis 9, wobei das erste Bündel (26) und das zweite Bündel (26) von Fasersträngen (30) aus einem Faserstrang mit einer anfänglichen Länge geschnitten werden, die größer als die zweite Länge (L2) und/oder größer als eine Summe aus der ersten Länge (L1) und der zweiten Länge (L2) ist.

11. Verfahren zur Fertigung eines Holmgurts nach einem der Ansprüche 7 bis 10, ferner umfassend den Schritt des Umhüllens eines Bündels (26) von Fasersträngen (30) vor einer Anordnung der mehreren Faserstränge (30) in der Form.

## Revendications

1. Pale de rotor pour une éolienne, la pale de rotor (4) comprenant au moins un capuchon de longeron (24), dans laquelle le capuchon de longeron (24) est agencé le long d'une envergure de la pale de rotor (24) et s'étend sensiblement entre le pied d'aile (12) et le bout d'aile (14), dans laquelle le capuchon de longeron comprend une pluralité de faisceaux (26) de mèches de fibres (30), qui sont incorporés dans une matrice de façon à fournir un élément renforcé par fibres, et dans laquelle une aire d'une section transversale du capuchon de longeron (24) dans un plan du profil aérodynamique de la pale de rotor (4) diminue avec l'augmentation de la distance par rapport au pied d'aile (12) et des faisceaux (26) de mèches de fibres (30) sont incorporés dans la matrice, dans laquelle un premier faisceau (26) de mèches de fibres (30) part d'une position du capuchon de longeron (24) qui est proche du pied d'aile (12) et s'étend dans le sens de l'envergure en direction du bout d'aile (14) jusqu'à une première distance maximale par rapport au pied d'aile (12), et un second faisceau (26) de mèches de fibres (30) part de la position du capuchon de longeron (24) qui est proche du pied d'aile (12) et s'étend dans le sens de l'envergure en direction du bout d'aile (14) jusqu'à une seconde distance maximale par rapport au pied d'aile, dans laquelle la seconde longueur (L2) du second faisceau (26) de mèches de fibres (30) est supérieure à la première longueur (L1) du premier faisceau (26) de mèches de fibres (30), **caractérisée en ce que** la pluralité de mèches de fibres (30) est directement placée dans une demi-coque de la pale de rotor (4) au cours de la fabrication du capuchon de longeron (24).

2. Pale de rotor selon la revendication 1, dans laquelle un nombre de faisceaux (26) dans la section transversale du capuchon de longeron (24) diminue avec la diminution de l'aire de la section transversale du capuchon de longeron (24).

3. Pale de rotor selon la revendication 1 ou 2, dans laquelle la pluralité de faisceaux (26) de mèches de fibres (30) comprend des groupes de faisceaux de mèches de fibres, dans laquelle les faisceaux (26) de mèches de fibres (30) de chaque groupe possèdent une longueur prédéterminée et sensiblement identique.

4. Pale de rotor selon l'une quelconque des revendications précédentes, dans laquelle les faisceaux (26) de mèches de fibres (30) sont enveloppés.

5. Pale de rotor selon la revendication 4, dans laquelle un matériau de l'enveloppe est différent comparativement à un matériau des fibres des mèches de fibres (30).

6. Éolienne (2) ayant un rotor comprenant au moins une pale de rotor (4) selon l'une quelconque des revendications précédentes.

7. Procédé de fabrication d'un capuchon de longeron (24) pour une pale de rotor (4) d'une éolienne (2), dans lequel le capuchon de longeron (24) est configuré pour être agencé le long d'une envergure de la pale de rotor (4) et s'étend sensiblement entre le pied d'aile (12) et le bout d'aile (14) lorsque le capuchon de longeron (24) est monté dans la pale de rotor (4), le procédé comprenant les étapes de :
l'agencement d'un premier faisceau (26) de mèches de fibres (30) dans un moule pour fabriquer le capuchon de longeron (24) ayant une section transversale dans un plan du profil aérodynamique de la pale de rotor (4), dans lequel l'aire de la section transversale diminue avec l'augmentation de la distance par rapport au pied d'aile (12), et dans lequel le premier faisceau (26) de mèches de fibres part d'une position du capuchon de longeron qui est proche du pied d'aile (12) et s'étend dans le sens de l'envergure en direction du bout d'aile (14) jusqu'à une première distance maximale par rapport au pied d'aile (12),
la découpe du premier faisceau (26) de mèches de fibres (30) à une première longueur (L1) déterminant la première distance maximale par rapport au pied d'aile,
l'agencement d'un second faisceau (26) de mèches de fibres (30) dans le moule, dans lequel le second faisceau (26) de mèches de fibres (30) part de la position du capuchon de longeron (24) qui est proche du pied d'aile (12) et s'étend dans le sens de l'envergure en direction du bout d'aile (14) jusqu'à une seconde distance maximale par rapport au pied d'aile, et
la découpe du second faisceau (26) de mèches de fibres (30) à une seconde longueur (L2) déterminant la seconde distance maximale par rapport au pied d'aile,
dans lequel la seconde longueur (L2) est supérieure à la première longueur (L1),
**caractérisé en ce que**
la pluralité de mèches de fibres (30) est directement placée dans une demi-coque de la pale de rotor (4) au cours de la fabrication du capuchon de longeron (24).

8. Procédé selon la revendication 7, comprenant en outre : le durcissement de la pluralité de faisceaux (26) de mèches de fibres (30) de façon à fournir un élément renforcé par fibres comprenant la pluralité de faisceaux (26) de mèches de fibres (30) qui sont incorporés dans une matrice.

9. Procédé selon la revendication 7 ou 8, comprenant en outre : la fourniture d'une mèche de fibres (30) sur le site de fabrication pour la fabrication de la pale de rotor (4), l'agencement et la découpe du premier faisceau (26) et du second faisceau (26) de mèches de fibres (30) sur le site de fabrication.

10. Procédé de fabrication d'un capuchon de longeron selon l'une quelconque des revendications 7 à 9, dans lequel le premier faisceau (26) et le second faisceau (26) de mèches de fibres (30) sont découpés à partir d'une mèche de fibres ayant une longueur initiale qui est supérieure à la seconde longueur (L2) et/ou supérieure à une somme de la première longueur (L1) et de la seconde longueur (L2).

11. Procédé de fabrication d'un capuchon de longeron selon l'une quelconque des revendications 7 à 10, comprenant en outre l'étape d'enveloppement d'un faisceau (26) de mèches de fibres (30) avant un agencement de la pluralité de mèches de fibres (30) dans le moule.
